# EUROPÄISCHE PATENTSCHRIFT

(11) **EP 2 535 155 B1**
(45) Veröffentlichungstag und Bekanntmachung des Hinweises auf die Patenterteilung: **19.03.2014**
(21) Anmeldenummer: 12171969.4
(22) Anmeldetag: 14.06.2012
(51) Int. Cl.: B27K 1/00, B27K 3/15, B27K 5/00, B27K 3/02, B27L 5/00, B32B 21/13, B44C 1/22, B44D 5/10, B44C 5/04, E04F 15/04, C08L 75/00

(54) **Verfahren zur Beeinflussung des optischen Erscheinungsbildes eines Holzelementes**
Method for influencing the visual appearance of a wooden element
Procédé destiné à influencer l'apparence optique d'un élément en bois

(30) Priorität: 15.06.2011 AT 8732011
(43) Veröffentlichungstag der Anmeldung: 19.12.2012
(73) Patentinhaber: mafi Naturholzboden GmbH, 5212 Schneegattern (AT)
(72) Erfinder: Fillafer, Friedrich, 5204 Strasswalchen (AT)
(74) Vertreter: Burger, Hannes

(56) Entgegenhaltungen:
- WO-A1-02/074507
- WO-A2-2006/087155

## Beschreibung

Die Erfindung betrifft ein Verfahren zur Beeinflussung des optischen Erscheinungsbildes eines Holzelementes, wie dies in Anspruch 1 angegeben ist.

Die WO 02/074507 A1 beschreibt ein Verfahren zur Steigerung der Festigkeitswerte, insbesondere der Biegesteifigkeitswerte und der Druckfestigkeitswerte von Holzbalken. Zur Erzielung dieser erhöhten Festigkeits- bzw. Steifigkeitswerte werden die entsprechend groß dimensionierten Holzbalken, welche für statisch definierte Tragkonstruktionen verwendet werden, einem mehrstufigen Behandlungsverfahren unterzogen. Bei diesem Behandlungsverfahren werden die Holzbalken mit entsprechend großen Querschnittsdimensionen für Tragwerke bzw. Tragkonstruktionen vorerst einer Mikrowellenstrahlung ausgesetzt, um in den Holzbalken eine Vielzahl von Hohlräumen zu bilden, wobei zumindest einige dieser mittels der Mikrowellenstrahlung erzeugten Hohlräume durch radial, tangential oder längs verlaufende Kanäle im Holz miteinander verbunden sind. Nachfolgend wird das mikrowellenbehandelte Holz einer Trocknung unterzogen und sodann das dementsprechend behandelte Holz mit einem Klebestoff imprägniert bzw. in einem Klebemittel getränkt. Dabei durchdringt der Klebstoff die Holzbalken via die intrinsisch ausgebildeten, im Holzinneren verlaufenden Hohlräume und Kanäle. Nachfolgend wird das mit dem Klebstoff imprägnierte Holz einem Verdichtungs- bzw. Pressvorgang, insbesondere einer Walzenpressung bzw. einem Heizpressvorgang, unterzogen, sodass sich die Hohlräume mit dem darin aufgenommenen Klebstoff zumindest teilweise schließen und der Klebstoff im imprägnierten Holz die Holzfasern miteinander verklebt. Mit dem angegebenen Verfahren ist es möglich, die Biege- bzw. Drucksteifigkeitswerte von natürlichem Holz zu steigern, indem die entsprechenden Holzbalken mit Klebemittel imprägniert bzw. intrinsisch getränkt werden. Damit lassen sich vergleichsweise tragfähigere Holzbalken erzielen, sodass statisch optimierte Tragkonstruktionen aufgebaut werden können.

Aus der DE 10 2008 012 391 A1 ist es bekannt, ein parkettartiges Bodenelement, welches mit einer Deckholzschicht versehen ist, an der Sichtoberseite mit maschinell eingebrachten Einprägungen zu versehen, um so eine natürliche Holzmaserung der Deckholzschicht optisch zu verstärken. Die Einprägungen in der Oberseite werden dabei durch einen Pressstempel oder durch eine Presswalze eingebracht. Diese Einprägungen in der Deckholzschicht sollen dabei eine relativ geringe Tiefe von weniger als 0,5 mm aufweisen. Mit diesen maschinell eingebrachten Einprägungen soll ein Bodenelement erzielt werden, welches auch bei einer Deckholzschicht aus einem Holz mit wenig abwechslungsreicher oder relativ unauffälliger Textur eine hochwertige, parketttypische Anmutung aufweisen soll. Vor allem porenarme bzw. in Bezug auf die Maserung relativ schlichte Holzarten, wie beispielsweise Buche, sollen durch dieses Prägeverfahren optisch lebendiger gestaltet werden. Nachteilig ist dabei, dass die durch einen Pressstempel oder eine Presswalze hergestellten Einprägungen in der Deckholzschicht einen regelmäßigen, unnatürlich wirkenden Charakter haben und sich in gewissen Abschnitten bezüglich Anordnung oder Konturierung bzw. Formgebung wiederholen werden. Der Grad der Natürlichkeit, welcher mit diesen Einprägungen erzielt wird, ist somit wenig zufriedenstellend. Insbesondere sind natürlich wirkende Unregelmäßigkeiten durch die vorgeschlagenen Prägemaßnahmen nicht erzielbar.

Die WO 2006/087155 A2 beschreibt ein Verfahren zur optischen Gestaltung der Oberfläche einer Holzschicht. Gemäß diesem Verfahren werden Risse bzw. Astlöcher im Holz mit einer kontrastierenden Farbe, insbesondere mit einer Füllmasse in einer Kontrastfarbe zum Holz ausgefüllt. Die Risse bzw. Astlöcher können dabei auch mit einer lichtdurchlässigen bzw. lichtstreuenden Füllmasse ausgefüllt werden, sodass bei Zuordnung einer Lichtquelle zur lichtdurchlässigen Füllmasse eine Ausleuchtung der mit der Füllmasse versehenen Risse erfolgt. Die mit einer farblich kontrastierenden Füllmasse versehenen Risse bzw. Astlöcher betonen deren Umrisskonturen und führt die Füllmasse außerdem zu einer geschlossenen, ebenen Oberfläche, wodurch die Holzschicht leichter zu reinigen ist. Bei diesem bekannten Verfahren werden natürlich vorkommende Fehler bzw. Schadstellen im Holz durch eine farblich kontrastierende Füllmasse quasi ausgekittet und hervorgehoben. Die entsprechenden Holzelemente werden dabei aus einer Charge bzw. einem Los von Holzelementen aussortiert. Dabei werden die jeweiligen Holzelemente von einem Fachmann qualitativ bewertet und werden jene Holzelemente, welche Schadstellen aufweisen aussortiert und sodann mit farblich kontrastierender Füllmasse ausgebessert.

Weiters ist es bekannt, mittels manueller Fräsvorgänge nutartige, zufallsartig erscheinende Furchen bzw. Vertiefungen in die Oberfläche von Holzelementen einzufräsen und diese nutartigen Vertiefungen nachfolgend mit farblich kontrastierender Füllmasse zu versehen. Die bislang bekannten Verfahren sind jedoch relativ unwirtschaftlich und für Serienproduktionen bzw. für großindustrielle Fertigungen wenig zufriedenstellend.

Der vorliegenden Erfindung liegt die Aufgabe zugrunde, ein Verfahren zur Beeinflussung bzw. dauerhaften Veränderung des optischen Erscheinungsbildes eines Holzelementes zu schaffen, welches möglichst natürlich wirkende, insbesondere zufallsartige Unregelmäßigkeiten im optischen Erscheinungsbild des Holzelementes erzeugt bzw. hervorhebt und welches Verfahren zugleich möglichst wirtschaftlich sein soll, um auch für die Serienfertigung bzw. Großserienproduktion besser geeignet zu sein.

Diese Aufgabe der Erfindung wird durch die Maßnahmen gemäß Anspruch 1 gelöst.

Ein Vorteil der erfindungsgemäßen Maßnahmen liegt darin, dass dadurch Holzelemente bereitgestellt werden, deren optisches Erscheinungsbild markant beeinflusst ist, wobei die entsprechend behandelten bzw. bearbeiteten Holzlamellen großindustriell bzw. in Art einer Serienproduktion bereitgestellt werden können und diese Bereitstellung außerdem in einem relativ wirtschaftlichen bzw. kostengünstigen Umfang ermöglicht ist. Insbesondere ist eine definierte bzw. gezielte Produktion von Holzelementen ermöglicht, deren optisches Erscheinungsbild durch besonders natürlich verlaufende bzw. wirkende Unregelmäßigkeiten in Form von Holzrissen beeinflusst ist. Diese Unregelmäßigkeiten werden zudem optisch betont, wodurch für viele Endbenutzer unter anderem ein besonders ansprechendes, optisches Erscheinungsbild aufgebaut wird.

Ein besonderer Vorteil der erfindungsgemäßen Maßnahmen liegt aber auch darin, dass dadurch sogar qualitativ relativ minderwertig angesehenes Holz, welches bislang kaum als Nutzholz Verwendung gefunden hat, in seinem Nutzwert gesteigert und quasi veredelt wird, und dass durch die besondere Auffälligkeit bzw. Unterscheidungskraft des optischen Erscheinungsbildes von erfindungsgemäß hergestellten bzw. bearbeiteten Holzelementen am Wirtschaftsmarkt bzw. bei Endkunden erhöhte Nachfrage erzielbar ist. Das heißt, dass durch die erfindungsgemäßen Maßnahmen auch relativ minderwertiges Holz zu hochwertigen Holzelementen weiterverarbeitet werden kann, wodurch auch Ausschuss aufgrund von Schadholz oder aufgrund von zweiter Qualität deutlich reduziert werden kann. Damit einhergehend wird ökonomischen und ökologischen Verbesserungsanforderungen besser entsprochen.

Durch die angegebenen Dimensionen der verarbeiteten Holzlamellen werden zum einen Vorteile in Bezug auf eine möglichst hohe Ausbeute des Holzwerkstoffes erzielt. Zum anderen wird durch die angegebenen Stärken bzw. Dickenabmessungen der verarbeiteten Holzlamellen eine intensive und möglichst verteilte Rissbildung in Bezug auf die Oberfläche bzw. die spätere Sichtfläche der Holzlamellen erzielt. Die entsprechenden Risse sind dabei besonders natürlich verlaufend und stellen für den Betrachter besonders zufällig wirkende Unregelmäßigkeiten bzw. Konturverläufe dar. Außerdem wird durch die relativ kleinvolumigen bzw. dünnen Holzlamellen eine längenmäßig begrenzte Rissbildung erzielt und eine völlige, längsgerichtete Spaltung der Holzelemente bzw. Holzlamellen hintan gehalten. Dennoch werden durch die angegebenen Maßnahmen zahlreiche, teilweise auch über die gesamte Dicke der Holzlamellen verlaufende Risse erzeugt, wodurch auch ausreichend markant erkennbare Rissbreiten erzielbar sind.

Ein wesentlicher Faktor zur Erzielung möglichst natürlich aussehender Risse ist durch die relativ hohe Holzfeuchte der Holzlamellen unmittelbar vor der technischen Trocknung definiert. Insbesondere wird durch raschen und intensiven Entzug von Holzfeuchte aus den Holzlamellen eine intensive bzw. zuverlässig eintretende und dennoch kontrollierte Rissbildung in den Holzlamellen erzielt. Diese technisch kontrolliert und bewusst herbeigeführten, natürlich aussehenden Risse werden im Speziellen im Zuge der technisch unterstützten bzw. beschleunigten Trocknung der Holzlamellen geschaffen, sodass auch eine großindustrielle Fertigung bzw. eine möglichst wirtschaftliche Bereitstellung von relativ lebendig wirkenden bzw. relativ stark strukturierten Holzelementen ermöglicht ist.

Durch das Einbringen einer Füllmasse in die technisch bzw. künstlich herbeigeführten und dennoch überaus natürlich wirkenden Risse kann das optische Erscheinungsbild der Holzelemente in positivem Sinn markant beeinflusst werden. Darüber hinaus wird durch das Ausfüllen der zufallsartigen, natürlich wirkenden Rissverläufe mit aushärtender Füllmasse die Praxistauglichkeit des Holzelementes erhöht. Insbesondere wird dadurch eine wesentlich einfachere Reinigung bzw. eine längerfristige Reinhaltung erzielt und durch die Vermeidung von scharfkantigen Furchen bzw. durch die Überdeckung oder Einbettung von Holzschiefern im Bereich der Rissfurchen bzw. der Holzoberfläche die Gefahr von Verletzungen für Personen minimiert. Die entsprechend hergestellten Holzelemente sind somit auch als Bodenbeläge für den Wohn- bzw. Innenraumbereich problemlos einsetzbar.

Von Vorteil sind auch die Maßnahmen gemäß Anspruch 2, da eine derartige Füllmasse auf Polyurethanbasis im ausgehärteten Zustand eine hohe mechanische Festigkeit bietet und eine hochfeste Verbindung bzw. Verklebung mit dem Holzwerkstoff ermöglicht. Insbesondere können dadurch auch relativ breite Risse rasch und zuverlässig ausgefüllt bzw. ausgegossen und geebnet werden, ohne dass die Gefahr eines späteren Herausbrechens oder Herausfallens der Füllmasse vorliegt. Insbesondere verbleibt eine derartige Füllmasse besonders dauerhaft in den Rissen des Holzelementes, sodass auch längerfristig keine optischen und nutzungstechnischen Beeinträchtigungen eintreten. Darüber hinaus bietet die Füllmasse auf Polyurethanbasis eine langfristig relativ schwund- und spannungsarme Rissüberbrückung und eine geringe Exothermie im Zuge des Aushärtungsprozesses. Außerdem wird durch die quasi nicht vorhandene Wasseraufnahmefähigkeit der Füllmasse, insbesondere durch dessen hohe Hydrophobie, ein Einsatz als Bodenelement bzw. als Möbelelement begünstigt.

Von Vorteil sind auch die Maßnahmen gemäß Anspruch 3, da dadurch ein Überquellen bzw. Vorspringen von viskoser Füllmasse an der Unterseite der Holzlamellen vermieden wird. Darüber hinaus kann dadurch eine möglichst vollständige Auffüllung der Risse mit der Füllmasse erfolgen, nachdem die Trägerschicht einen unerwünschten Ab- bzw. Ausfluss von viskoser Füllmasse verhindert. Ein weiterer Vorteil liegt darin, dass dadurch auch relativ breite Risse mit viskoser bzw. gießfähiger Füllmasse ausgefüllt werden können, ohne dass allmählicher Schwund bzw. ein Absetzen oder Ausfließen der Füllmasse im Zuge der Aushärtungsphase auftritt. Insbesondere kann dadurch die Qualität des Ausfüllvorganges unter Verwendung von ursprünglich fließfähiger bzw. pastöser Füllmasse wesentlich gesteigert und die für diesen Ausfüllvorgang benötigte Zeitdauer möglichst gering gehalten werden.

Von Vorteil sind auch die Maßnahmen gemäß Anspruch 4, da dadurch ein gutes Verhältnis in Bezug auf Gewicht und Festigkeit bzw. Steifigkeit des entsprechend hergestellten Holzelementes erreicht wird. Darüber hinaus ist ein derart aufgebautes Holzelement relativ kostengünstig produzierbar und ist eine relativ dünne Holzlamelle ausreichend, um ein markantes, lebendiges Erscheinungsbild zu bieten. Aber auch die Haftung bzw. die Ausreißfestigkeit der Füllmasse wird dadurch positiv beeinflusst, nachdem durch die relativ offenporige Holzstruktur der Trägerschicht aus Weich- bzw. Nadelholz eine starke Verklebung bzw. zuverlässige Verbindung zu der in den Rissen des Holzelementes vorliegenden Füllmasse erreicht ist. Dies ist insbesondere bei über die gesamte Dicke der Holzlamellen verlaufenden, relativ breiten Rissen von Vorteil. Insbesondere sind dadurch auch Rissbreiten von mehr als 5 mm bzw. von bis zu 30 mm problemlos und dauerhaft mit der Füllmasse überbrückbar.

Vorteilhaft sind auch die Maßnahmen gemäß Anspruch 5, da derartige Holzlamellen bei intensiver, technischer Trocknung ein relativ optimales bzw. sehr ansprechendes, abwechslungsreiches Rissbild erzeugen. Insbesondere sind in derartigen Holzlamellen überaus natürlich wirkende, über die Breite und Länge der Holzlamellen relativ gut verteilte Risse erzeugbar. Ein besonderer Vorteil der Verwendung von Zerreiche liegt darin, dass eine hohe Verfügbarkeit von derartigem Hartholz vorliegt und in einem solchen Holz ein optisch interessantes bzw. lebendiges Rissbild erzeugt werden kann. Darüber hinaus ist eine relativ wirtschaftliche Beschaffung derartiger Hölzer gewährleistet.

Markante und besonders produktionssicher herstellbare Risse werden durch die Maßnahmen gemäß Anspruch 6 bzw. 7 erzielt. Insbesondere kann durch eine Hochtemperatur-Trocknungskammer eine relativ wirtschaftliche Rissbildung in den Holzlamellen erzielt werden, wodurch eine Grundlage für eine zielgerichtete Produktion von derartigen Holzelementen geschaffen ist. Insbesondere wird dadurch eine gute Kontinuität im Herstellungsverfahren bzw. eine hohe Prozessstabilität erzielt
Aber auch die Maßnahmen gemäß Anspruch 8 sind von Vorteil, da dadurch innerhalb relativ kurzer Zeitdauer eine technisch gesteuerte bzw. gezielte Rissbildung in den Holzlamellen erzielt wird und außerdem die Wirtschaftlichkeit des Verfahrens aufgrund der relativ kurzen Einwirkungszeitdauer relativ hoch ist.

Von Vorteil sind auch die Maßnahmen nach Anspruch 9, da dadurch eine ausreichend hohe, natürlich bedingte Holzfeuchte in den Holzlamellen beibehalten werden kann, ohne dass aufwändige, technische Maßnahmen erforderlich sind. Die durch die angegebenen Maßnahmen sichergestellte bzw. eingehaltene Mindestholzfeuchte begünstigt dabei eine intensive Rissbildung während des nachfolgenden, relativ raschen, technisch beschleunigten Trocknungsprozesses. Die Wirtschaftlichkeit des erfindungsgemäßen Herstellungs- bzw. Beeinflussungsverfahren kann somit durch wenigstens eine der Maßnahmen nach Anspruch 9 relativ hoch gehalten werden.

Ferner sind die Maßnahmen nach Anspruch 10 von Vorteil, da dadurch die Intensität bzw. die Ausprägung der Rissbildung technisch beeinflusst, insbesondere durch Konditionierung oder Steigerung der Holzfeuchte intensiviert werden kann. Außerdem können dadurch auch solche Holzlamellen, welche beispielsweise durch längerfristige Lagerung oder Freilufttrocknung bereits eine ungünstig niedrige Holzfeuchte aufweisen, auf einen höheren Feuchtigkeitsgehalt angehoben werden, um so eine möglichst günstige Rissbilderzeugung zu erzielen. Darüber hinaus ist es dadurch ermöglicht, innerhalb eines Holzstapels aus zu verarbeitenden Holzlamellen eine relativ einheitliche Holzfeuchte der einzelnen Holzlamellen zu erzielen und somit eine möglichst gleichmäßige Rissbildung in Bezug auf die insgesamt zu behandelnden Holzlamellen bzw. in Bezug auf diese Charge von Holzlamellen zu erzielen.

Zudem sind die Maßnahmen nach Anspruch 11 vorteilhaft, da dadurch die Füllmasse auch in vergleichsweise schmale bzw. feine Risse eingebracht werden kann und somit ein möglichst vollzähliges und vollständiges Auffüllen der künstlich bzw. technisch hervorgerufenen Risse in der Holzoberfläche gewährleistet ist. Insbesondere kann durch einen Spachtelvorgang mit der Füllmasse auch relativ zähflüssige bzw. pastöse und somit besonders schwundfreie Füllmasse zuverlässig in relativ enge bzw. schmale Risse eingebracht werden.

Vorteilhaft sind auch die Maßnahmen nach Anspruch 12, da dadurch jene Oberflächenabschnitte der Holzlamellen, in welchen ursprünglich keine Risse enthalten waren, ihre natürliche Holzoptik beibehalten bzw. wieder erlangen und somit der natürliche Charakter der Holzoberfläche des Holzelementes gewährleistet wird. Außerdem wird die Gefahr eines Herausreißen der Füllmasse aus den Rissen, wie dies beispielsweise bei Schab- oder Schneidvorgängen der Fall wäre, hintan gehalten.

Durch die Maßnahmen gemäß Anspruch 13 würde eine möglichst vollzählige und vollständige Auffüllung der jeweils vorhandenen Risse mit der Füllmasse erzielt. Darüber hinaus werden dadurch auch relativ breite Risse, bei denen die Füllmasse im Zuge der Aushärtung zu erkennbarem Schwund neigt, relativ ebenflächig bzw. bündig zur Sichtoberfläche des Holzelementes aufgefüllt.

Durch die Maßnahmen gemäß Anspruch 14 wird ein optisch ansprechendes Erscheinungsbild gewährleistet und können die durch das Verstreichen der Füllmasse hervorgerufenen Flecken an der Holzoberfläche damit vollständig beseitigt werden. Das optische Erscheinungsbild der Holzoberflächen sowie der mit Füllmasse ausgefüllten Risse wird dadurch positiv beeinflusst.

Schließlich umfasst die Erfindung ein Verfahren zur Herstellung von Holzböden oder Möbelplatten mit einer Nutz- oder Dekorschicht aus Holz, welche Nutz- oder Dekorschicht auf wenigstens eine Trägerschicht aufgeleimt wird, wie dies in Anspruch 15 angegeben ist. Die damit erzielbaren Vorteile und technischen Effekte sind den vorhergehenden und nachfolgenden Beschreibungsteilen zu entnehmen.

Das vorhergehend beschriebene Verfahren ist vorteilhaft bei der Herstellung von Holzelementen für den Innenraumbereich, insbesondere für Holzböden oder Möbelplatten.

Zum besseren Verständnis der Erfindung wird diese anhand der nachfolgenden Figuren näher erläutert.

Es zeigen jeweils in stark vereinfachter, schematischer Darstellung:
- Fig. 1: Rundholz bzw. ein Bloch als Ausgangsmaterial zur Herstellung von Holzelementen;
- Fig. 2: einen Stapel aus Pfosten bzw. Balkenelementen, welche zur Freilufttrocknung aufgestapelt sind;
- Fig. 3: einen Pfosten aus natürlich gewachsenem Holz, welcher die Grundlage zur Bildung der verfahrensgemäßen Holzlamellen bildet;
- Fig. 4: einen Stapel aus Holzlamellen als Ausgangsbasis zur weiteren erfindungsgemäßen Verarbeitung;
- Fig. 5: eine Ausführungsform einer technischen Befeuchtungsvorrichtung für einen Stapel aus Holzlamellen;
- Fig. 6: eine Trockenkammer, insbesondere eine Hochtemperatur-Trockenkammer zum raschen und intensiven Entzug von Holzfeuchte aus den Holzlamellen;
- Fig. 7: den Verfahrensschritt des Aufbringens bzw. Aufleimens von Holzlamellen mit technisch herbeigeführten Rissen auf eine Trägerschicht in beispielhafter, perspektivischer Ansicht;
- Fig. 8: einen Verfahrensschritt im Zuge der Auffüllung der Risse mit einer im Verarbeitungszustand viskosen bzw. pastösen Füllmasse;
- Fig. 9: ein Ausführungsbeispiel eines nach dem erfindungsgemäßen Verfahren hergestellten Holzelementes nach der Oberflächenbehandlung, insbesondere nach dem Schleifvorgang an der Sichtoberfläche der Nutz- bzw. Dekorschicht.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen. Weiters können auch Einzelmerkmale oder Merkmalskombinationen aus den gezeigten und beschriebenen unterschiedlichen Ausführungsbeispielen für sich eigenständige, erfinderische oder erfindungsgemäße Lösungen darstellen.

Sämtliche Angaben zu Wertebereichen in gegenständlicher Beschreibung sind so zu verstehen, dass diese beliebige und alle Teilbereiche daraus mit umfassen, z.B. ist die Angabe 1 bis 10 so zu verstehen, dass sämtliche Teilbereiche, ausgehend von der unteren Grenze 1 und der oberen Grenze 10 mitumfasst sind, d.h. sämtliche Teilbereich beginnen mit einer unteren Grenze von 1 oder größer und enden bei einer oberen Grenze von 10 oder weniger, z.B. 1 bis 1,7, oder 3,2 bis 8,1 oder 5,5 bis 10.

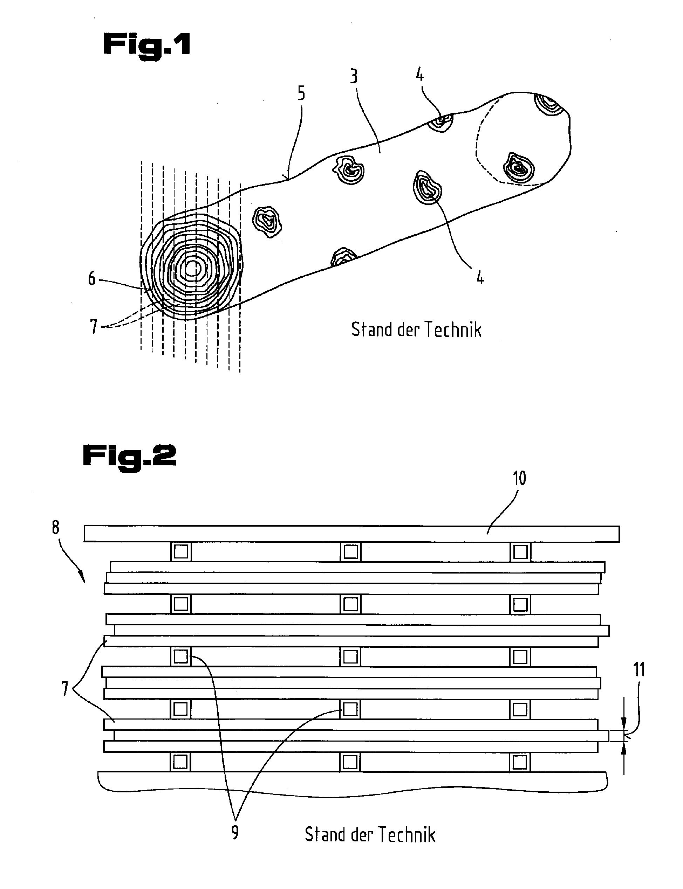

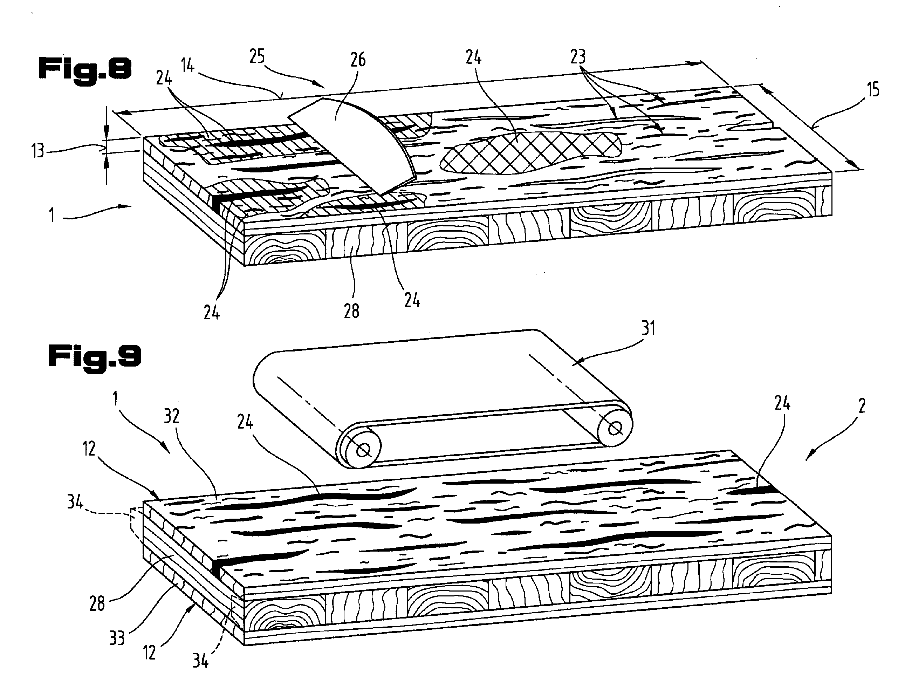

In den Fig. 1 bis 9 sind diverse Verfahrensschritte des erfindungsgemäßen Verfahrens zur Beeinflussung des optischen Erscheinungsbildes eines Holzelementes 1 bzw. zur Herstellung eines entsprechenden Holzelementes 1 exemplarisch und auszugsweise veranschaulicht. Einzelne der stark schematisiert dargestellten Verfahrensschritte sind dabei optional anwendbar und zählen nicht zum Umfang des erfindungsgemäßen Verfahrens. Wesentlich ist, dass durch eine Mehrzahl von sequentiell bzw. parallel ablaufenden Verfahrensmaßnahmen letztendlich ein in Fig. 9 schematisch dargestelltes, exemplarisch aufgebautes Holzelement 1 gebildet ist, dessen optisches Erscheinungsbild durch diverse technische Verfahrensmaßnahmen markant beeinflusst ist. Der in Fig. 9 dargestellte, mehrschichtige Verbundkörper 2 stellt also nur eine beispielhafte Aufbauform des nach dem erfindungsgemäßen Verfahren hergestellten Holzelementes 1 dar.

Als Ausgangsmaterial zur Herstellung eines in Fig. 9 angedeuteten Holzelementes 1 dient natürlich gewachsenes Holz, welches nach der Schlägerung entsprechender Baumarten in Form von Rundholz 3 bzw. in Art von sogenannten Holzblochen vorliegt. Derartiges Rundholz 3 weist eine Mehrzahl natürlich entwickelter Merkmale, wie zum Beispiel Astansätze 4, Einschnürungen 5, Verdickungen, narbenbedingten Verwuchs oder dergleichen auf. Außerdem ist natürlich gewachsenes Holz für seine typische, natürlich gebildete, einzigartige Maserung bzw. Textur bekannt, welche unter anderem durch die Wuchs- bzw. Jahresringe 6 definiert bzw. beeinflusst wird.

Derartiges Rundholz 3 wird in an sich bekannter Weise in Sägewerken in einzelne Pfosten 7 aufgeteilt bzw. zu Holzbalken aufgeschnitten. Die entsprechenden Pfosten 7 werden gemäß dem Stand der Technik entweder luftgetrocknet - Fig. 2 - oder immer häufiger auch einer technischen Trocknung unterzogen, um die Holzfeuchte der Pfosten 7 zu reduzieren und das Holz vor allem für eine Verwendung im Innenbereich von Häusern, insbesondere für die Möbelherstellung, geeignet zu machen. Die Lufttrocknung bzw. die technische Trocknung erfolgt dabei typischerweise in einem Holzstapel 8 aus mehreren neben- und übereinander angeordneten Pfosten 7 mit dazwischen angeordneten Zwischenlagen 9, insbesondere sogenannten Stapellatten oder Zwischengittern, welche zur besseren Belüftung bzw. Luftzirkulation im Umfeld der Pfosten 7 dienen.

Entsprechend dem Stand der Technik erfolgt diese Holztrocknung, egal ob durch Freilufttrocknung oder durch eine technische Trocknung mit Warmluftumwälzung, möglichst behutsam bzw. langfristig, sodass in dem zu trocknenden Holz möglichst keine Risse entstehen. Vor allem bei einer schonenden bzw. temperaturkontrollierten und langfristigen Trocknung können derartige als Trocknungsfehler bezeichnete Risse bzw. Aufspaltungen von Pfosten 7 oder Holzbalken vermieden werden. Bei der in Fig. 2 dargestellten, klassischen Freilufttrocknung von Holz sind typischerweise Überdachungen 10, beispielsweise Abdeckungen oder Lagerhallen vorgesehen, um das zu trocknende Holz vor Witterungseinflüssen, insbesondere vor Regen oder Schnee, weitgehendst zu schützen und eine schonende, allmähliche Trocknung zu erzielen.

Die aus dem Rundholz 3 erzeugten Pfosten 7 weisen typischerweise eine Stärke 11 von einem Zoll oder mehr auf. Üblich sind Pfosten 7 aus Hartholz mit einer Stärke 11 zwischen 30 mm und 100 mm, wobei Abstufungen Bereich von 10 mm typisch sind. Diese Pfosten 7 mit einer Stärke 11 zwischen 25 mm bis ca. 100 mm werden sodann möglichst schonend luftgetrocknet, um daraufhin als sogenanntes Tischlerholz von möbelverarbeitenden Betrieben weiterverarbeitet werden zu können.

Die in den Fig. 1 und 2 dargestellten Verfahrensschritte bzw. Maßnahmen dienen dazu, die letztendlich von einer Tischlerei zu verarbeitenden Pfosten 7 bzw. Holzelemente möglichst trocken und rissfrei bereitstellen zu können, um ein nachträgliches Schwinden und Aufklaffen der aus den Pfosten 7 hergestellten Holzbauteile, welche beispielsweise zu Einrichtungsgegenständen verarbeitet wurden, zu vermeiden bzw. hintan zu halten.

Demgegenüber ist entsprechend dem erfindungsgemäßen Verfahren vorgesehen, im Holz eine Mehrzahl von Rissen herzustellen und dabei möglichst natürliche Rissverläufe zu garantieren. Insbesondere wird eine gezielte, technisch unterstützte Rissbildung angestrebt, welche eine gute Reproduzierbarkeit gewährleistet und eine Grundlage für eine Produktion bzw. Bereitstellung in größerem Umfang schafft.

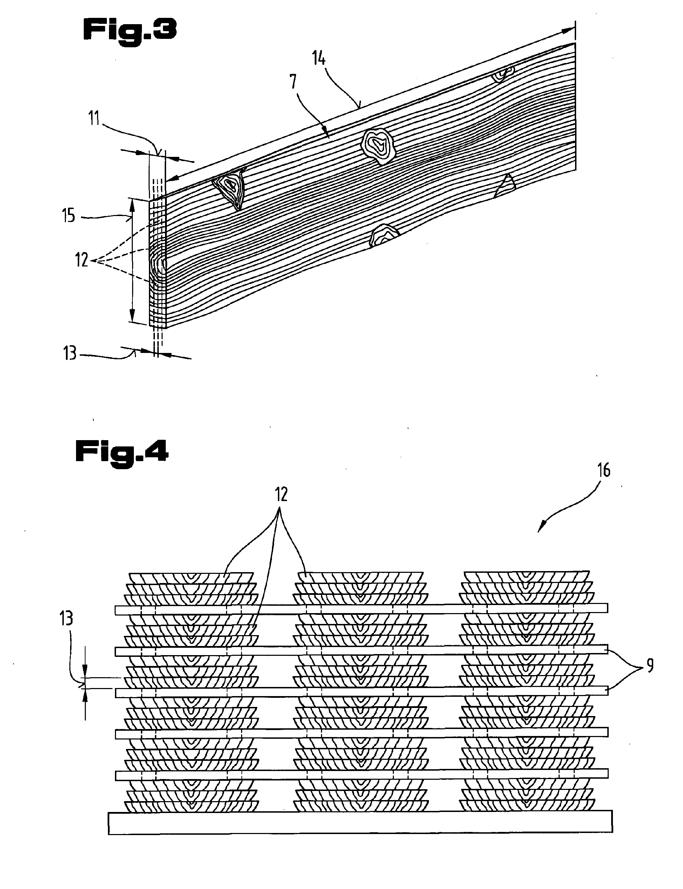

In den Fig. 3, 4 sind Verfahrensschritte des erfindungsgemäßen Verfahrens schematisch veranschaulicht. Gemäß diesen Maßnahmen wird eine Mehrzahl von relativ dünnen Holzlamellen 12 bereitgestellt. Diese Holzlamellen 12 bilden einen Bestandteil bzw. eine Komponente des letztendlichen Holzelementes 1, wie es in Fig. 9 exemplarisch dargestellt wurde. Zweckmäßig ist es dabei, die Holzlamellen 12 aus sägerauen Pfosten 7 zu bilden. Dabei werden die Pfosten 7 in Bezug auf deren Stärke 11 auf mehrere vergleichsweise dünne Holzlamellen 12 aufgeteilt, was beispielsweise mit einer Band- oder Kreissäge erfolgen kann. Beispielsweise bei Pfosten 7 mit einer Stärke 11 von ca. 30 mm können durch sägende Aufspaltung solcher Pfosten 7 eine Mehrzahl von Holzlamellen 12 mit einer Dicke 13 von etwa 7 mm hergestellt werden. Insbesondere können durch mehrfache Sägevorgänge, beispielsweise aus einem Pfosten 7 oder aus einem vorgeschnittenen Holzbalken, mehrere Holzlamellen 12 mit einer Länge 14 von zumindest 200 cm, einer Breite 15 von zumindest 10 cm und einer Dicke 13 zwischen 4 mm bis 10 mm, bevorzugt etwa 7 mm, bereitgestellt werden. Vorzugsweise werden solche Holzlamellen 12 aus Pfosten 7 oder grob vorgeschnitten Holzbalken mittels einer Band- oder Kreissäge zurecht geschnitten. Alternativ ist es selbstverständlich auch möglich, direkt aus dem Rundholz 3 die jeweiligen Holzlamellen 12 zu produzieren, wobei in diesem Fall vorzugsweise Bandsäge-Aggregate eingesetzt werden. Die bereitgestellten Holzlamellen 12 können dabei besäumt oder unbesäumt sein und je nach Dimension des Ausgangsmaterials bzw. Pfostens 7 eine Breite 15 zwischen 10 cm und 25 cm, bevorzugt von in etwa 17 cm aufweisen. Eine verarbeitungstechnisch günstige Länge 14 der Holzlamellen 12 beträgt zumindest 200 cm bzw. kann diese Länge 14 zwischen 200 cm und 500 cm, üblicherweise bei in etwa 300 cm liegen.

Wesentlich ist, dass die Holzfeuchte dieser Holzlamellen 12 zumindest unmittelbar vor der technischen Trocknung relativ hoch ist. Diese relativ hohe Holzfeuchte der Holzlamellen 12 kann durch die natürliche Holzfeuchte des entsprechenden Rundholzes 3 gewährleistet sein. Es ist aber auch eine natürliche oder eine technisch kontrollierte Klimatisierung möglich, durch welche eine allmähliche Trocknung verlangsamt wird oder die Holzfeuchte durch technische Maßnahmen sogar gesteigert werden kann. Zweckmäßig ist es, wenn die Holzfeuchte dieser Holzlamellen 12 mehr als 20 %, insbesondere mehr als 40 %, bevorzugt zwischen 30% bis 70% beträgt. Eine entsprechend hohe Holzfeuchte kann durch unmittelbare Weiterverarbeitung von geschlägertem Rundholz 3, durch technische Befeuchtung und/oder durch geeignete Klimatisierung sichergestellt bzw. erreicht werden.

In Fig. 4 ist beispielhaft ein Holzlamellenstapel 16 veranschaulicht, welcher eine Mehrzahl nebeneinander angeordneter und lagenartig übereinander gestapelter Holzlamellen 12 umfasst. Diese Holzlamellen 12 besitzen eine relativ hohe Holzfeuchte, nachdem sie in relativ kurzem, zeitlichen Abstand nach der Schlägerung von natürlich gewachsenem Holz bzw. in relativ kurzem Abstand nach dem Aufschneiden von Rundholz 3 zu Pfosten 7 bzw. zu Holzlamellen 12 gestapelt wurden, sodass die durch Lufttrocknung herbeigeführte Austrocknung des Holzes noch relativ gering ist und ein Wert von mehr als 20 %, zweckmäßigerweise von in etwa 40% bis 50% in Bezug auf die Holzfeuchte dieser Holzlamellen 12 vorliegt bzw. gewährleistet ist. Beispielsweise kann durch Beschattung der Holzlamellen 12 bzw. durch Lagerung des Holzlamellenstapels 16 in relativ feuchter Umgebung, beispielsweise in der Nähe von Gewässern, die Holzfeuchte in den Holzlamellen 12 auch über einen längeren Zeitraum relativ hoch gehalten werden, sodass eine Holzfeuchte von mehr als 20 %, bevorzugt von mehr als 30% gewährleistet ist, also eine Holzfeuchte nahe der natürlichen, mittleren Holzfeuchte während des Baumwuchses, vorliegt.

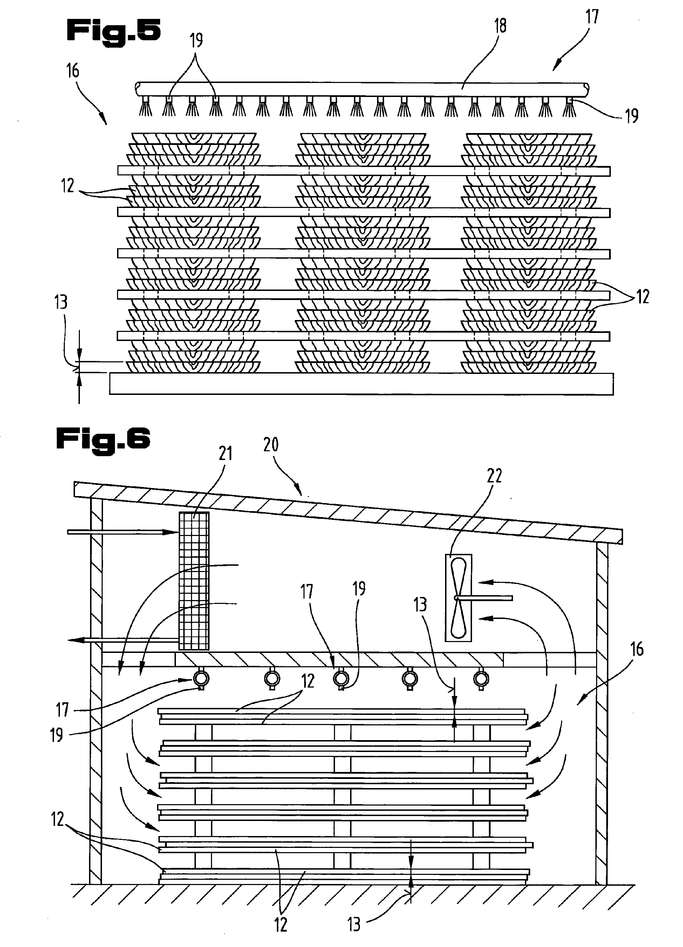

Entsprechend einer optionalen, besonders wirksamen Maßnahme zur Sicherstellung einer Mindestholzfeuchte, insbesondere zur Erzielung einer möglichst geringfügigen Austrocknung des Holzes bzw. zur Erhöhung der Holzfeuchte von aufgeschnittenem Holz, insbesondere von bereits hergestellten Holzlamellen 12, ist vorgesehen, eine aktive, technische Befeuchtungsvorrichtung 17 einzusetzen, wie dies in Fig. 5 schematisch veranschaulicht wurde. Eine derartige Befeuchtungsvorrichtung 17 kann eine Verteilungsvorrichtung 18 für Wasser umfassen. Diese Verteilungsvorrichtung 18 kann in einfacher Art und Weise durch eine Sprinklervorrichtung definiert sein, welche eine Mehrzahl von Sprühdüsen 19 zur Verteilung von natürlichem Wasser umfasst. Das via die Befeuchtungsvorrichtung 17 bzw. über die Verteilungsvorrichtung 18 möglichst fein verteilte bzw. vernebelte Wasser wirkt dabei auf die Holzlamellen 12 ein. Insbesondere wird auf den Holzlamellenstapel 16 Wasser aufgebracht bzw. eingebracht, beispielsweise aufgesprüht, sodass die Holzfeuchte der Holzlamellen 12 relativ hoch bzw. über einem unteren Grenzwert gehalten wird, welcher zweckmäßigerweise bei in etwa 20 % beträgt.

Eine aktive technische Befeuchtung mittels einer Befeuchtungsvorrichtung 17, wie sie in Fig. 5 schematisch veranschaulicht wurde, kann jedoch auch erübrigt werden. Dies insbesondere dann, wenn relativ frisch gefälltes Holz weiterverarbeitet wird bzw. der allmähliche Holztrocknungsprozess, beispielsweise durch Lufttrocknung, längerfristig hintan gehalten wird. Eine langfristig hohe Holzfeuchte kann insbesondere durch kühle bzw. schattige Lagerung des Rundholzes 3, der Pfosten 7 und/oder der Holzlamellen 12 bewerkstelligt werden. Somit kann analog zu einer Befeuchtungsvorrichtung 17 zur Sicherstellung einer ausreichenden Holzfeuchte in den Holzlamellen 12 auch eine Abschattungsmaßnahme bzw. eine Klimatisierungsvorrichtung verstanden bzw. eingesetzt werden.

Eine wesentliche Maßnahme des erfindungsgemäßen Verfahrens liegt darin, dass die relativ feuchten, das heißt eine relativ hohe, beispielsweise nahezu die ursprüngliche Holzfeuchte aufweisenden Holzlamellen 12 einer relativ raschen bzw. intensiven, technischen Trocknung unterzogen werden, wie diese Verfahrensmaßnahme in Fig. 6 beispielhaft und schematisch veranschaulicht wurde. Die Fig. 6 skizziert dabei ein Ausführungsbeispiel einer sogenannten Trockenkammer, insbesondere einer Hochtemperatur-Trockenkammer 20 zur Erzielung eines raschen und intensiven Entzuges von Feuchte aus den Holzlamellen 12, welche typischerweise in Form eines Holzlamellenstapels 16 in die Hochtemperatur-Trockenkammer 20 eingebracht wurden. Eine derartige Hochtemperatur-Trockenkammer 20 umfasst bevorzugt wenigstens einen Wärmetauscher 21 zur Zufuhr von Wärmeenergie in das Innere der Trockenkammer und wenigstens einen Ventilator 22, beispielsweise ein Saugzuggebläse zur Umwälzung der erwärmten Trocknungsluft bzw. der sogenannten Brüden im Inneren der Trockenkammer. Die Hochtemperatur-Trockenkammer 20 kann auch als Vakuum-Trockenkammer ausgeführt sein, um die benötigte Wärmeleistung bzw. Temperatur im Inneren der Trockenkammer reduzieren zu können.

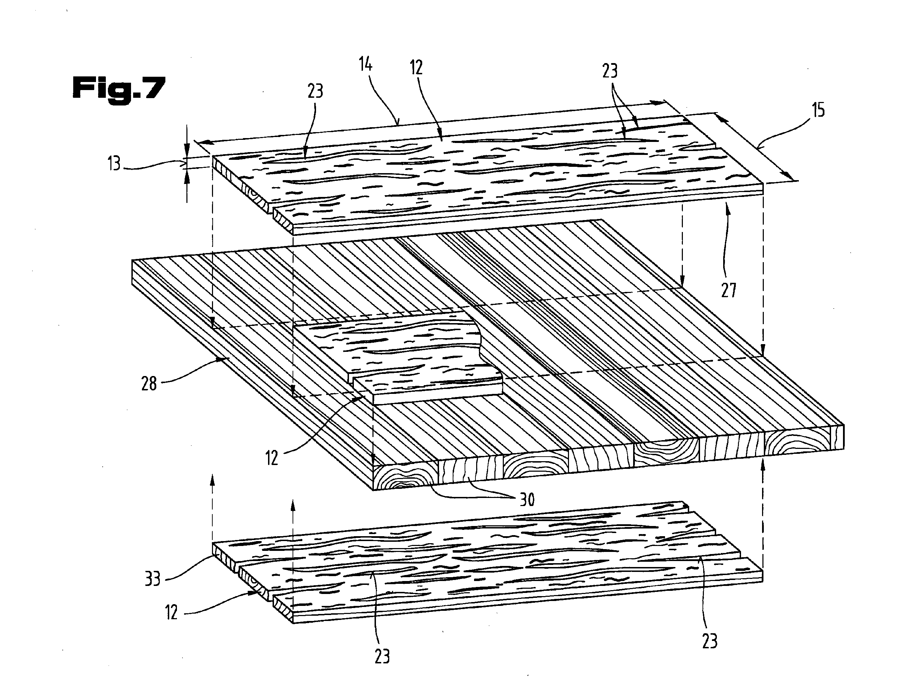

Wesentlich ist, dass die mit einer aus dem Stand der Technik bekannten Trockenkammer 20 herbeigeführte, technische Trocknung der relativ dünnen Holzlamellen 12, welche eine Dicke 13 zwischen 4 mm bis 10 mm, bevorzugt von in etwa 7 mm, aufweisen, einen raschen und intensiven Entzug von Feuchte aus den Holzlamellen 12 bewirkt. Insbesondere ist der Trocknungsprozess in der Trockenkammer 20 derart eingestellt bzw. derart gewählt, dass durch die technische Trocknung eine Vielzahl von über die Länge 14 und Breite 15 der Holzlamellen 12 sporadisch bzw. zufallsartig verteilter und über die gesamte Dicke 13 der Holzlamellen 12 verlaufender Risse 23 gebildet werden, wie dies in Fig. 7 schematisch veranschaulicht wurde. Insbesondere wird durch relativ intensive bzw. nahezu aggressive Trocknung, insbesondere durch eine Hochtemperatur-Trocknung in einer Hochtemperatur-Trockenkammer 20 ein rascher und intensiver Entzug von Feuchte aus den Holzlamellen 12 erzwungen, wodurch eine Vielzahl von Risse 23 in den Holzlamellen 12 entstehen, wobei sich zumindest einzelne dieser Risse 23 auch über die gesamte Dicke 13 der relativ dünnen Holzlamellen 12 erstrecken. Die Risse 23 sind dabei schlitzartig ausgeführt und ergeben ein besonders natürliches Rissbild in den Holzlamellen 12, wobei die Länge und Breite bzw. die Struktur und der Verlauf dieser Risse 23 vor allem durch die Inhomogenität bzw. durch das natürliche Wuchsbild und durch den diversitären Aufbau des Holzes aus weichen und härteren Schichten definiert bzw. beeinflusst wird. Diese Rissbildung erscheint für den Betrachter willkürlich bzw. absolut natürlich, wodurch das Erscheinungsbild eines derartigen Holzbauteils positiv beeinflusst wird. Durch die relativ geringe Dicke der Holzlamellen 12 wird außerdem erreicht, dass eine möglichst verteilte Anordnung der Risse 23 in Bezug auf die Länge 14 und Breite 15 der Holzlamellen 12 vorliegt. Demgegenüber würde bei relativ dicken Holzelementen, beispielsweise ab einer Dicke von 20 mm, eine eher konzentrierte Rissbildung bzw. eine relativ schlechte Rissverteilung in Bezug auf die Oberfläche des Holzelementes eintreten bzw. sogar eine Holzspaltung auftreten. Außerdem wird durch diese relativ dünnen Holzlamellen 12 erreicht, dass einzelne, relativ breite Risse 23 entstehen können, welche sich über die gesamte Dicke 13 erstrecken und somit Durchbrüche darstellen. Zudem kann eine Vielzahl relativ schmaler Risse 23 entstehen, welche sich nur über einen Teil der Höhe bzw. Dicke 13 der Holzlamellen 12 erstrecken. Somit ist eine erhöhte Vielfalt von Spalten bzw. Rissformen erzielt. Die durch entsprechend rasche und intensive technische Trocknung gezielt bzw. kontrolliert herbeigeführten Risse 23 in den Holzlamellen 12 stellen dabei ein besonderes Erkennungsmerkmal dar, welches das optische Erscheinungsbild eines damit aufgebauten Holzelementes 1 optisch markant beeinflusst.

Wie am besten aus Fig. 8 ersichtlich ist, wird zumindest ein Teil, insbesondere der Großteil, dieser durch die technische Trocknung herbeigeführten Risse 23 in den Holzlamellen 12 mit einer Füllmasse 24 zumindest teilweise ausgefüllt. Diese Füllmasse 24 ist im ursprünglichen Zustand, insbesondere im Verarbeitungszustand, viskos bzw. zähflüssig, sodass die Füllmasse 24 in die Risse 23 eingebracht, insbesondere mühelos eingedrückt bzw. eingepresst werden kann. Dieser Einbringvorgang kann beispielsweise durch einen Auftragungs- bzw. Spachtelvorgang 25 bewerkstelligt werden, wie er in Fig. 8 schematisch veranschaulicht wurde. Dieser Auftragungs- bzw. Spachtelvorgang 25 in Bezug auf die während der Verarbeitung pastöse bzw. zähflüssige Füllmasse 24 kann dabei mit einem einfachen Spachtelwerkzeug 26 manuell erfolgen oder auch mithilfe einer nicht dargestellten Auftragungs- bzw. Eindrückvorrichtung zumindest teilweise automatisiert ablaufen. Eine derartige Auftragungs- bzw. Eindrückvorrichtung umfasst zweckmäßigerweise wenigstens eine Auslassdüse für in einem Vorratsbehälter gespeicherte, viskose Füllmasse 24 und wenigstens eine Eindrückrolle und/oder einen Streichbalken für die Füllmasse 24.

Besonders zweckmäßig ist es dabei, die Füllmasse 24 in Bezug auf deren Kolorierung derart auszuwählen, dass sie eine zur Holzfarbe bzw. zum Holzton der Holzlamellen 12 kontrastierende Farbe aufweist. Zweckmäßig ist es dabei, bei Holzlamellen 12 aus einer dunklen Holzart, beispielsweise Eiche, Kirsche, Teak, Nuss, oder dergleichen, eine vergleichsweise helle Farbe für die Füllmasse 24 vorzusehen. Demgegenüber ist es zweckmäßig, bei Holzarten mit relativ heller Holzfarbe, beispielsweise Esche, Ahorn, Birke oder dergleichen, einen relativ dunklen Farbton, beispielsweise braun oder schwarz als Farbton für die Füllmasse 24 zu verwenden, sodass die Füllmasse 24 gegenüber dem Erscheinungsbild des Holzes stark kontrastierend ist. Durch eine kontrastreiche Farbwahl der Füllmasse 24 gegenüber der Holzfarbe des Holzes der Holzlamellen 12 werden die zumindest großteils aufgefüllten Risse 23 in der Oberfläche der Holzlamellen 12 betont bzw. hervorgehoben. Insbesondere werden durch Auswahl einer zur Holzfarbe deutlich kontrastierenden Farbe der Füllmasse 24 Konturen und Verläufe der damit ausgefüllten Risse 23, insbesondere deren variierende Längs- und Breitenerstreckungen betont bzw. hervorgehoben, sodass dadurch die zufallsartigen, äußerst natürlich wirkenden Risse 23 zu einem optisch attraktiven Rissbild in den Holzlamellen 12 bzw. im späteren Holzelement 1 führen.

Grundsätzlich gibt es Holzarten mit dunklen oder relativ hellen Farbtönen. Dunkle Holzarten, wie z.B. Eiche, Kirsch, Lärche oder Nuss, haben typischerweise dunkelbraune, rötliche oder schwarze Holztöne. Helle Holzarten, wie z.B. Esche, Ahorn oder Birke, besitzen hauptsächlich gelbliche oder weiße Farbtöne in verschiedenen Abstufungen und Variationen. Der Farbton der Füllmasse 24 kann durch Beimengung eines entsprechenden Farbstoffes im Zuge der Arbeitsvorbereitung vor dem Auftragungs- bzw. Spachtelvorgang 25 gegenüber den Holzlamellen 12 bzw. gegenüber den Rissen 23 einfach beeinflusst werden. Der Farbton der Füllmasse 24 wird zweckmäßigerweise derart gewählt, dass die entsprechende Fugen- bzw. Füllmasse 24 deutlich kontrastierend zum Farbton der jeweiligen Holzart ist. So wird beispielsweise bei dunklen Holzarten eine relativ helle Füllmasse 24, beispielsweise in Weiß- und/oder Gelbtönen, verwendet - und umgekehrt. Ebenso ist es effektvoll, einen zur natürlichen Holzfarbe stark kontrastierenden Farbton aus dem Bereich der Grund- bzw. Spektralfarben zu wählen, wie z.B. rot, orange, gelb, grün, blau, indigo oder violett. Besondere Effekte sind auch dann erzielbar, wenn die Füllmasse 24 metallische Farbtöne aufweist, wie z.B. gold, silber, aluminium, stahlgrau oder dergleichen.

Die im Verarbeitungszustand pastöse bzw. viskose Füllmasse 24, welche nachfolgend allmählich aushärtet und die zuvor vorhandenen Risse 23 dauerhaft ausfüllt, ist vorzugsweise durch eine Füllmasse 24 auf Polyurethanbasis gebildet. Das Füllvermögen der Füllmasse 24 ist derart gewählt, dass Risse 23 mit einer mittleren Breite von mehr als 2 mm, bevorzugt von bis zu 20 mm dauerhaft ausgefüllt werden können. Diese Ausfüllung soll dabei in Bezug auf die Oberfläche der Holzlamellen 12 möglichst ebenflächig bzw. bündig und porenfrei sein. Eine Füllmasse 24 auf Polyurethanbasis ermöglicht dies in vorteilhafter Art und Weise. Außerdem besitzt eine Füllmasse 24 auf Polyurethanbasis eine gute Verklebungskraft gegenüber dem Holzelement 1 bzw. gegenüber den Holzlamellen 12 und eignet sich somit auch für relativ breite Risse 23 von bis zu 20 mm bzw. sogar von bis zu 30 mm, ohne dass die Gefahr eines allmählichen Herauslösens oder Herausbrechens der ausgehärteten Füllmasse 24 besteht.

Als besonders zweckmäßig hat sich herausgestellt, die Füllmasse 24 durch eine zweikomponentige Gießmasse auf Polyurethanbasis zu bilden. Die Stammkomponente der Gießmasse bzw. der Füllmasse 24 beruht auf Polyurethanbasis, welche mit einem Härter, bevorzugt auf Isocyanatbasis, vermischt wird und sodann in dieser zähflüssigen bzw. pastösen Form zumindest in einen überwiegenden Teil der Risse 23 der Holzlamellen 12 eingebracht wird, wie dies in Fig. 8 schematisch dargestellt wurde. Die entsprechend zusammengesetzte Gieß- bzw. Füllmasse 24 ist dabei vorzugsweise lösungsmittelfrei und gießbar bzw. mit einem Spachtelwerkzeug 26 im Zuge des zuvor genannten Auftragungs- bzw. Spachtelvorganges 25 in die Risse 23 eindrück- bzw. einbringbar. Dieser Auftragungs- bzw. Spachtelvorgang 25 kann dabei manuell und/oder unter maschineller Unterstützung erfolgen, wie dies vorhergehend bereits erläutert wurde. Beispielsweise können Verteilungs- und/oder Antriebwalzen vorgesehen sein, welche über die Oberfläche der Holzlamellen 12 bewegt werden und dabei die Füllmasse 24 in die Risse 23 eindrücken.

Die Aushärtung der in die Risse 23 eingebrachten Füllmasse 24 kann durch Lufttrocknung erfolgen und/oder durch zusätzliche Wärmeeinbringung, beispielsweise mittels Heizstrahlern und/oder in einer Trockenkammer, technisch beschleunigt werden. Bei einer geeigneten, zweikomponentigen Füllmasse 24 auf Polyurethanbasis, welche vor der Verarbeitung mit einem Härter auf Isocyanatbasis vermischt wird, wird eine ausreichende Erhärtung bzw. Verhärtung der Füllmasse 24 zur Weiterverarbeitung der Holzlamellen 12, insbesondere für den nachfolgend noch erläuterten Schleifvorgang, sogar in üblich temperierten Räumen mit einer Raumtemperatur zwischen 18 bis 25°C bereits nach nur wenigen Stunden, insbesondere innerhalb von 24 Stunden erreicht, was im Hinblick auf effiziente bzw. wirtschaftliche Prozessabläufe üblicherweise ausreichend ist. Eine komplette Durchhärtung der Füllmasse 24 bei Raumtemperatur wird dabei nach ca. einer Woche erreicht. Die Endhärte einer solchen Füllmasse 24 beträgt in etwa zwischen 70 bis 80 Shore D (shore durometer).

Entsprechend einer besonders zweckmäßigen Maßnahme ist vorgesehen, die Holzlamellen 12, welche mit einer Mehrzahl von verteilt angeordneten Rissen 23 versehen sind, die sich vereinzelt auch über die gesamte Dicke 13 der Holzlamellen 12 erstrecken können, noch vor dem Ausfüllen der Risse 23 mit einer im Ur- bzw. Verarbeitungszustand viskosen bzw. pastösen Füllmasse 24, an einer der Flachseiten, insbesondere an der Unterseite 27, mit einer Trägerschicht 28 aus Holz zu verbinden. Insbesondere ist es zweckmäßig, die Holzlamellen 12, in welchen die mit technischer Unterstützung gebildeten, besonders natürlich wirkenden Risse 23 verlaufen, mit einer Trägerschicht 28 aus Holz zu verkleben bzw. möglichst vollflächig zu verleimen, wie dies in Fig. 7 angedeutet wurde. Vorzugsweise wird diese Verbindungs- bzw. Verklebungsmaßnahme ergriffen, bevor die Füllmasse 24 in die Risse 23 eingebracht wird. Dabei wird Holzkleber bzw. Leim auf die letztendliche Unterseite 27 der mit zahlreichen Rissen 23 versehenen Holzlamellen 12 und/oder auf die Oberseite der Trägerschicht 28 aufgebracht und durch einen Pressvorgang, vorzugsweise unter gleichzeitiger Wärmeeinwirkung, eine dauerhafte, adhäsive Verbindung zwischen wenigstens einer Holzlamelle 12, insbesondere zwischen mehreren, nebeneinander angeordneten Holzlamellen 12 und der Trägerschicht 28 aufgebaut.

Wie in Fig. 7 schematisch veranschaulicht wurde, ist es dabei zweckmäßig, mehrere der relativ schmalen Holzlamellen 12 auf eine vergleichsweise großflächige Trägerschicht 28 aufzukleben, um eine rationelle bzw. wirtschaftliche Fertigung von zu produzierenden Holzelementen 1 - Fig. 9 - zu erzielen. Der entsprechende Sandwich-Aufbau aus einer relativ großflächigen, plattenartigen Trägerschicht 28 und aus mehreren an einer ihrer Flachseiten, insbesondere an ihrer Oberseite, anhaftenden Holzlamellen 12 kann in einem nachfolgenden Verfahrensschritt in einfacher Art und Weise in kleinere Plattenelemente unterteilt bzw. zersägt werden, um zwei- oder mehrschichtige Holzbauteile zu erhalten, welche in etwa die Abmessungen bzw. Umrisskonturen des letztendlichen Holzelementes 1 aufweisen. Die Aufteilung in Halbfabrikate gemäß Fig. 8 kann dabei vor dem Auftragungs- bzw. Spachtelvorgang 25 gemäß Fig. 8, oder auch erst nach dem Auftragungs- bzw. Spachtelvorgang 25 erfolgen. Anstelle eines vollflächigen Auftrages von Leim 29 auf die Trägerschicht 28 bzw. auf die Unterseite 27 der Holzlamellen 12 kann es auch ausreichend sein, einen partiellen bzw. abschnittsweisen Auftrag von Leim 29 bzw. von dementsprechendem Klebemittel vorzunehmen.

Zweckmäßig ist es, als Holz für die Trägerschicht 28 eine Holzart aus der Gruppe der Weichhölzer, insbesondere Fichte oder Tanne auszuwählen. Zweckmäßig ist es dabei, wenn die Trägerschicht 28 als ein- oder mehrschichtige Platte ausgebildet ist bzw. Plattenform aufweist und aus einer Mehrzahl von an der Längsseite miteinander verleimten, brettartigen Stabelementen 30 gebildet ist.

Als zweckmäßig hat es sich weiters erwiesen, das Holz für die Holzlamellen 12 aus der Pflanzenfamilie der Buchengewächse auszuwählen. Insbesondere die Hölzer aus der Baumgattung der Eichen eignen sich besonders gut, um ein harmonisches, gut weiterverarbeitbares Rissbild in den Holzlamellen 12 zu erzielen. Eine besonders geeignete bzw. bevorzugte Holzart ist durch die Zerreiche gebildet, welche in Mittel- und Südosteuropa natürlich vorkommt und neben einem guten Verhalten in Bezug auf die Rissbildung bei thermischer Einwirkung, auch erhöhte Wirtschaftlichkeit bietet. Alternativ ist es auch denkbar, bezüglich der Textur relativ schlichte Holzarten, wie zum Beispiel Hainbuchen oder Rotbuchen mittels dem erfindungsgemäßen Verfahren zu bearbeiten, insbesondere einer technisch kontrolliert herbeigeführten Rissbildung zu unterziehen.

Ein intensiver bzw. relativ aggressiver Entzug von Feuchte aus den Holzlamellen 12 wird vor allem unter Einsatz einer Hochtemperatur-Trockenkammer 20 erzielt. Zweckmäßig ist es dabei, die mit relativ hoher Holzfeuchte in die Hochtemperatur-Trockenkammer 20 eingebrachten Holzlamellen 12 während einer Hochtemperatur-Trocknungsphase mit einer Temperatur von mehr als 80 °C, insbesondere zwischen 100 °C bis 200 °C zu beaufschlagen und unter dieser Temperatureinwirkung eine rasche Trocknung der Holzlamellen 12 zu bewirken. Als besonders praktikabel für eine Mehrzahl von Holzarten, insbesondere für die Behandlung von Zerreiche, hat sich herausgestellt, die entsprechenden Holzlamellen 12 mit einer Temperatur zwischen 150 °C bis 200 °C über einen Zeitraum von 4 bis 8 Stunden zu beaufschlagen. Die entsprechenden Temperaturen beziehen sich dabei auf die Umgebungstemperatur bzw. auf die Lufttemperatur im Bereich um die zu trocknenden Holzlamellen 12.

Eine effektive Thermobehandlung zur Erzielung eines ansprechenden und zugleich verarbeitungstechnisch bzw. prozesstechnisch günstigen Rissbildes in den Holzlamellen 12 umfasst ein Verfahren mit drei Prozessschritten. In einer Hochtemperaturphase wird dabei das zu behandelnde Holz bzw. die Temperatur der Umgebungsluft auf 150 °C bis 200 °C erhitzt. Die entsprechende Wärmeenergie kann dabei durch ein in Fig. 6 veranschaulichtes Wärmeregister bzw. durch einen Wärmetauscher 21 zugeführt werden. Ventilatoren 22 im Inneren der Hochtemperatur-Trockenkammer 20 sorgen für die notwendige, gleichmäßige Umwälzung der Atmosphäre in der Hochtemperatur-Trockenkammer 20 und für den Wärmetransport ausgehend vom Wärmetauscher 21 zum Holzstapel 16 bzw. durch den Holzstapel 16 hindurch. Während der Hochtemperatur-Trocknungsphase wird zweckmäßigerweise kein Wasserdampf in die Hochtemperatur-Trockenkammer 20 zugeführt. Die Atmosphäre innerhalb der Hochtemperatur-Trockenkammer 20 wird durch die Holzeigenschaften, insbesondere durch den jeweiligen Wassergehalt beeinflusst bzw. bestimmt. Demgegenüber wird während der dritten Phase, welche durch die Abkühl- und Konditionierungsphase für die Holzlamellen 12 definiert ist, Wasser in die Behandlungskammer eingespritzt.

Während der Phase 1, insbesondere während der Startphase, wird die Temperatur in der Hochtemperatur-Trockenkammer 20 innerhalb weniger Stunden auf 100 °C erhöht. Anschließend wird die Temperatur auf 120 °C bis 140 °C gesteigert, wodurch der Feuchtigkeitsgehalt in den Holzlamellen 12 rasch abnimmt. In der zweiten Phase, welche einer Hochtemperatur-Trocknungsphase mit intensiver Wärmebehandlung entspricht, wird die Temperatur für 4 bis 8 Stunden auf 150 °C bis 200 °C erhöht. Eine nachfolgende dritte Phase, insbesondere eine sogenannte Abkühl- und Konditionierungsphase dient zum Abkühlen und Befeuchten, insbesondere zum Stabilisieren der Holzlamellen 12. In diesem Abkühlprozess wird die Temperatur in der Trockenkammer auf 80 °C bis 90 °C gesenkt. Zugleich wird der Feuchtigkeitsgehalt der Holzlamellen auf rund 4 % erhöht bzw. gehalten, indem in der Hochtemperatur-Trockenkammer 20 über mehrere Stunden ein Befeuchtungsvorgang stattfindet. Dieser Befeuchtungsvorgang kann vorzugsweise durch eine Befeuchtungsvorrichtung 17 erfolgen, welche über eine Mehrzahl von Sprühdüsen Wasser bzw. Nieselregen in die Hochtemperatur-Trockenkammer 20 einbringt und dadurch den Holzfeuchtigkeitsgrad der Holzlamellen von unter 4 % auf in etwa 4 % anhebt. Als Produkt aus dieser Thermo- und Benetzungsbehandlung entstehen zum einen Holzlamellen 12, welche mit einer Vielzahl von technisch initiierten, besonders natürlich wirkenden Rissen 23 übersät bzw. versehen sind, und zum anderen Brüden, welche zu einem Großteil aus Wasserdampf bestehen.

Neben dieser Abkühl- bzw. Konditionierungsphase, welche unmittelbar im Anschluss an die thermische Behandlung der Holzlamellen 12 stattfindet, ist es auch zweckmäßig, eine Mindestholzfeuchte der Holzlamellen 12 vor der technischen Trocknung sicherzustellen. Dies kann durch Benetzen der Holzlamellen 12 mit einem Sprühnebel oder Nieselregen aus Wasser erfolgen, wie dies in Fig. 5 beispielhaft angedeutet wurde. Ebenso ist es möglich, eine Mindestholzfeuchte der Holzlamellen 12 vor der technischen Trocknung sicherzustellen, indem für eine entsprechende Klimatisierung der Holzlamellen 12 gesorgt wird. Insbesondere ist es möglich, durch Beschattung der Holzlamellen 12 und/oder durch Zuschneiden der Holzlamellen 12 aus einem größeren bzw. großvolumigeren Holzblock, insbesondere aus Holzpfosten 7, in einem ausreichend kurzen Zeitraum vor der technischen Trocknung oder in einem ausreichend kurzem Zeitraum nach der Schlägerung von entsprechendem Holz, eine für die Rissbildung günstige, relativ hohe Holzfeuchtigkeit in den Holzlamellen 12 zu gewährleisten.

Wie am besten den schematischen Darstellungen gemäß den Fig. 8, 9 zu entnehmen ist, wird die im Zuge des Auftragungs- bzw. Spachtelvorganges 25 an der Oberfläche der Holzlamellen 12 verstrichene bzw. verteilte Füllmasse 24 nach ihrer Aushärtung bzw. nach ausreichender Erhärtung abgeschliffen, sodass die Holzoberfläche von der gegenüber den Rissen 23 überschüssigen Füllmasse 24 befreit wird und die Füllmasse 24 vorwiegend nur in den relativ langen bzw. breiten, thermisch initiierten Rissen 23 verbleibt. Zum Abschleifen von überschüssiger, flächig verstrichener Füllmasse 24 ist es zweckmäßig, eine Bandschleifvorrichtung 31 einzusetzen. Diese Bandschleifvorrichtung 31 bearbeitet die letztendliche Sicht- bzw. Nutzfläche auf der Nutz- oder Dekorschicht 32 des Holzelementes 1 gemäß Fig. 9 derart, dass die Füllmasse 24 möglichst nur in den Rissen 23 mit einer Breite von mehr als 2 mm verbleibt.

Zweckmäßig kann es sein, die Verfahrensschritte in Bezug auf das Auffüllen der Risse 23 mit Füllmasse 24 sowie in Bezug auf das Abschleifen der Oberfläche der Holzlamellen 12 wenigstens einmal zu wiederholen, sodass ursprünglich vorhandene Risse 23 mit einer Breite von mehr als 2 mm möglichst vollzählig und auch möglichst vollständig mit Füllmasse 24 ausgefüllt sind. Zweckmäßig kann es dabei sein, das Abschleifen der letztendlichen Sichtoberfläche der Holzlamellen 12 solange fortzusetzten, bis die ausgehärtete Füllmasse 24 von den Konturen der ursprünglichen; thermisch hervorgerufenen Risse 23 scharfkantig begrenzt ist, sodass dünnschichtige Schlieren aus Füllmasse 24 an der Sichtoberfläche der Holzlamellen 12 vermieden sind.

Die gemäß wenigstens einem der vorhergehend beschriebenen Verfahrensmaßnahmen produzierten Holzelemente 1, bei welchen das optische Erscheinungsbild durch eine technisch bewusst herbeigeführte Rissbildung markant beeinflusst wird, kann zweckmäßigerweise zur Herstellung von Holzböden oder Möbelplatten eingesetzt werden. Derartige Holzböden oder Möbelplatten weisen eine Nutz- oder Dekorschicht 32 auf, welche auf wenigstens eine Trägerschicht 28 aufgeklebt bzw. aufgeleimt wird, wie dies in Fig. 9 beispielhaft veranschaulicht wurde. Die Nutz- oder Dekorschicht 32 ist dabei durch eine Mehrzahl von Holzlamellen 12 bzw. durch Holzelemente 1 gebildet, welche gemäß einzelnen der vorhergehend beschriebenen Verfahrensmaßnahmen hergestellt werden.

Um möglichst verzugsfreie Holzelemente 1 bzw. dementsprechende Holzböden oder Möbelplatten zu erzielen, ist es zweckmäßig, die Unterseite der Trägerschicht 28 mit einer Gegenzuglage 33 zu versehen. Zweckmäßig ist es dabei, relativ stark bzw. massiv aufgerissene Holzlamellen 12, deren optisches Erscheinungsbild ungünstig ist, als Gegenzuglage 33 zu verwenden und derartige Holzlamellen 12 mit der letztendlichen Unterseite der Trägerschicht 28 zu verkleben bzw. zu verleimen, wie dies aus einer Zusammenschau der Fig. 7 und 9 ersichtlich ist.

Sofern das Holzelement 1 als Fußbodenelement, insbesondere als Holzdiele vorgesehen ist, kann zumindest an den Längsseitenflächen und/oder an den Stirnflächen eine Nut-/Federausbildung 34 vorgesehen sein, wie dies in Fig. 9 in strichlierten Linien angedeutet wurde. Eine derartige Nut-/Federausbildung 34 dient zur formschlüssigen Verbindung mit benachbarten bzw. anreihbaren Holzelementen 1 zur Bildung eines großflächigeren Holzbodens mit zumindest teilweise ausgefüllten, farblich konstatierenden Rissen 23 bzw. Füllmassen 24 an der Nutz- bzw. Sichtoberfläche. Die technisch herbeigeführten bzw. intensivierten Risse 23 sind dabei durch die eingebrachte, farblich kontrastierende Füllmasse 24 nicht kaschiert, sondern technisch hervorgehoben bzw. betont.

Die Ausführungsbeispiele erläutern mögliche Ausführungsvarianten des erfindungsgemäßen Verfahrens bzw. eines damit hergestellten Holzelementes 1, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt. Es sind also auch sämtliche denkbaren Ausführungsvarianten, die durch Kombinationen einzelner Details der dargestellten und beschriebenen Ausführungsvariante möglich sind, vom Schutzumfang mit umfasst.

Der Ordnung halber sei abschließend darauf hingewiesen, dass zum besseren Verständnis des Aufbaus des Holzelementes 1 dieses bzw. dessen Bestandteile teilweise unmaßstäblich und/oder vergrößert und/oder verkleinert dargestellt wurden.

Die den eigenständigen erfinderischen Lösungen zugrundeliegende Aufgabe kann der Beschreibung entnommen werden.

Vor allem können die einzelnen in den Fig. 1-9 gezeigten Maßnahmen bzw. Ausführungen den Gegenstand von eigenständigen, erfindungsgemäßen Lösungen bilden. Die diesbezüglichen, erfindungsgemäßen Aufgaben und Lösungen sind den Detailbeschreibungen dieser Figuren zu entnehmen.

**Bezugszeichenaufstellung**

| | | | |
|---|---|---|---|
| | | 26 | Spachtelwerkzeug |
| 1 | Holzelement | 27 | Unterseite |
| 2 | Verbundkörper | 28 | Trägerschicht |
| 3 | Rundholz | 29 | Leim |
| 4 | Astansatz | 30 | Stabelement |
| 5 | Einschnürung | | |
| | | | |
| | | 31 | Bandschleifvorrichtung |
| 6 | Jahresring | 32 | Nutz- oder Dekorschicht |
| 7 | Pfosten | 33 | Gegenzuglage |
| 8 | Holzstapel | 34 | Nut-/Federausbildung |
| 9 | Zwischenlage | | |
| 10 | Überdachung | | |
| | | | |
| 11 | Stärke | | |
| 12 | Holzlamelle | | |
| 13 | Dicke | | |
| 14 | Länge | | |
| 15 | Breite | | |
| | | | |
| 16 | Holzlamellenstapel | | |
| 17 | Befeuchtungsvorrichtung | | |
| 18 | Verteilungsvorrichtung | | |
| 19 | Sprühdüse | | |
| 20 | Trockenkammer | | |
| | | | |
| 21 | Wärmetauscher | | |
| 22 | Ventilator | | |
| 23 | Riss | | |
| 24 | Füllmasse | | |
| 25 | Auftragungs- bzw. Spachtelvorgang | | |

## Patentansprüche

1. Verfahren zur Beeinflussung des optischen Erscheinungsbildes eines ein- oder mehrlagigen, plattenartigen Holzelementes (1), **gekennzeichnet durch**
- Bereitstellen von Holzlamellen (12) mit einer Länge (14) von zumindest 200 cm, einer Breite (15) von zumindest 10 cm und einer Dicke (13) zwischen 4 mm bis 10 mm, bevorzugt etwa 7 mm,
- Sicherstellen einer Holzfeuchte dieser Holzlamellen (12) von mehr als 20%, insbesondere mehr als 40%, bevorzugt zwischen 30% bis 70%,
- technische Trocknung für raschen und intensiven Entzug von Holzfeuchte aus diesen Holzlamellen (12) derart, dass eine Vielzahl von über die Länge (14) und Breite (15) der Holzlamellen (12) sporadisch verteilter und teilweise über die gesamte Dicke (13) der Holzlamellen (12) verlaufender Risse (23) gebildet werden,
- Auswählen einer im Verarbeitungs- oder Ausgangszustand viskosen, während einer Aushärtungsphase verhärtenden Füllmasse (24) mit einer zur Holzfarbe oder zum Holzton der Holzlamellen (12) kontrastierenden Farbe,
- Ausfüllen von zumindest einem Teil der **durch** die technische Trocknung herbeigeführten Risse (23) in den Holzlamellen (12) mit der viskosen Füllmasse (24), welche eine zur Holzfarbe kontrastierende Farbe aufweist, sodass die Konturen und Verläufe der damit ausgefüllten Risse (23) optisch betont werden.

2. Verfahren nach Anspruch 1, **gekennzeichnet durch** Auswahl einer Füllmasse (24) auf Polyurethanbasis mit einem Füllvermögen für Risse (23) mit einer mittleren Breite von mehr als 2 mm, bevorzugt von bis zu 20 mm.

3. Verfahren nach Anspruch 1 oder 2, **dadurch gekennzeichnet, dass** die Holzlamellen (12) vor dem Ausfüllen der Risse (23) mit der ursprünglich viskosen Füllmasse (24) an der Unterseite (27) mit wenigstens einer Trägerschicht (28) aus Holz verbunden, insbesondere vollflächig verleimt werden.

4. Verfahren nach Anspruch 3, **dadurch gekennzeichnet, dass** als Holz für die Trägerschicht (28) eine Holzart aus der Gruppe der Weichhölzer, insbesondere Fichte oder Tanne, ausgewählt wird.

5. Verfahren nach einem der Ansprüche 1 bis 4, **dadurch gekennzeichnet, dass** als Holz für die Holzlamellen (12) eine Holzart aus der Pflanzenfamilie der Buchengewächse, insbesondere aus der Baumgattung der Eichen, vorzugweise in Art der Zerreiche, ausgewählt wird.

6. Verfahren nach einem der Ansprüche 1 bis 5, **gekennzeichnet durch** raschen und intensiven Entzug von Feuchte aus den Holzlamellen (12) mittels einer Hochtemperatur-Trockenkammer (20).

7. Verfahren nach einem der Ansprüche 1 bis 6, **gekennzeichnet durch** Entzug von Feuchte aus den Holzlamellen (12) umfassend eine Hochtemperatur-Trocknungsphase mit einer Temperatur von mehr als 80°C, insbesondere zwischen 100°C bis 200°C.

8. Verfahren nach einem der Ansprüche 1 bis 7, **gekennzeichnet durch** Entzug von Feuchte aus den Holzlamellen (12) umfassend eine Hochtemperatur-Trocknungsphase mit einer Temperatur zwischen 150°C bis 200°C über einen Zeitraum von 4 bis 8 Stunden.

9. Verfahren nach einem der Ansprüche 1 bis 8, **gekennzeichnet durch** Sicherstellen der Mindestholzfeuchte der Holzlamellen (12) vor der technischen Trocknung der Holzlamellen (12) **durch** entsprechende Klimatisierung, insbesondere **durch** Beschattung der Holzlamellen (12) und/oder **durch** Zuschneiden der Holzlamellen (12) aus einem größeren Holzblock, insbesondere aus Pfosten (7), in einem ausreichend kurzen Zeitraum vor der technischen Trocknung oder in einem ausreichend kurzen Zeitraum nach der Schlägerung von entsprechendem Holz.

10. Verfahren nach einem der Ansprüche 1 bis 9, **gekennzeichnet durch** Sicherstellen der Mindestholzfeuchte oder **durch** Erhöhen der Holzfeuchte der Holzlamellen (12) vor der technischen Trocknung der Holzlamellen (12) **durch** Benetzen der Holzlamellen (12) mit einem Sprühnebel oder Nieselregen aus Wasser.

11. Verfahren nach einem der Ansprüche 1 bis 10, **gekennzeichnet durch** Aufbringen, insbesondere **durch** Aufspachteln der ursprünglich viskosen Füllmasse (24) auf die Sichtoberfläche der Holzlamellen (12) und damit einhergehendes Eindrücken der Füllmasse (24) in die Risse (23).

12. Verfahren nach Anspruch 11, **gekennzeichnet durch** Abschleifen von an der Sichtoberfläche der Holzlamellen (12) verstrichener und verteilter Füllmasse (24) nach dem Erhärten oder Aushärten der Füllmasse (24).

13. Verfahren nach Anspruch 11 und 12, **gekennzeichnet durch** Wiederholen der Verfahrensschritte Auffüllen der Risse (23) mit Füllmasse (23) und Abschleifen der Sichtoberfläche der Holzlamellen (12) bis ursprünglich vorhandene Risse (23) mit einer Breite von mehr als 2 mm möglichst vollzählig und möglichst vollumfänglich mit Füllmasse (24) gefüllt sind.

14. Verfahren nach einem der Ansprüche 11 bis 13, **gekennzeichnet durch** Abschleifen der Sichtoberfläche der Holzlamellen (12) bis die erhärtete oder ausgehärtete Füllmasse (24) von den Konturen der Risse (23) scharfkantig begrenzt ist.

15. Verfahren nach einem oder mehreren der vorhergehenden Ansprüche, **dadurch gekennzeichnet, dass** die Holzlamellen (12) oder die Holzelemente (1) zur Bildung einer Nutz- oder Dekorschicht (32) aus Holz für Holzböden oder Möbelplatten verwendet werden, , welche Nutz- oder Dekorschicht (32) auf wenigstens eine Trägerschicht (28) aufgeleimt wird.

## Claims

1. Method for influencing the visual appearance of a single-layer or multi-layer, plate-like wooden element (1) **characterized by**
- providing wood slats (12) having a length (14) of at least 200 cm, a width (15) of at least 10 cm and a thickness (13) of between 4 mm to 10 mm, preferably approximately 7 mm,
- ensuring that these wood slats (12) have wood moisture content of more than 20%, in particular of more than 40%, preferably between 30% and 70%,
- technical drying for a quick and intense extraction of wood moisture out of these wood slats (12) in such a way that a plurality of fissures (23) are created which are spread spo-radically across the length (14) and the width (15) of the wood slats (12) and partially ex-tending across the entire thickness (13) of the wood slats (12),
- selecting a filling material (24) which in its processing or initial state is viscous and cures during a curing phase, which filling material (24) has a color which is in contrast to the color of the wood or the shade of wood of the wood slats (12),
- filling the viscous filling material (24) having a color which is in contrast to the color of the wood or the shade of wood of the wood slats (12) into at least a part of the fissures (23) which have been caused in the wood slats (12) by the technical drying, so that the con-tours and the courses of the fissures (23) filled with the filling material (24) are visually ac-centuated.

2. Method according to claim 1, **characterized by** selecting a filling material (24) on polyurethane basis having a filling power for fissures (23) exhibiting a medium width of more than 2 mm, preferably of up to 20 mm.

3. Method according to claim 1 or 2, **characterized in that** the wood slats (12), prior to filling the fissures (23) with the initially viscous filling material (24), are connected, in particular glued across the entire surface, to at least one carrier layer (28) made of wood at their lower face (27).

4. Method according to claim 3, **characterized in that** a kind of wood from the group of the soft-woods, in particular spruce or fir, is selected as wood for the carrier layer (28).

5. Method according to one of claims 1 to 4, **characterized in that** a kind of wood from the plant family of Fagaceae, in particular from the tree genus of Oak, preferably of kind of Turkey Oak, is selected as wood for the wood slats (12).

6. Method according to one of claims 1 to 5, **characterized by** quick and intense extraction of wood moisture from the wood slats (12) by means of a high-temperature drying chamber (20).

7. Method according to one of claims 1 to 6, **characterized by** extraction of moisture from the wood slats (12) comprising a high-temperature drying phase at a temperature of more than 80°C, in particular between 100° and 200°C.

8. Method according to one of claims 1 to 7, **characterized by** extraction of moisture from the wood slats (12) comprising a high-temperature drying phase at a temperature between 150°C and 200°C over a period of 4 to 8 hours.

9. Method according to one of claims 1 to 8, **characterized by** ensuring that the wood slats (12) have a minimum wood moisture content prior to the technical drying of the wood slats (12) by corresponding climate control, in particular shadowing the wood slats (12) and/or cutting the wood slats (12) out of a larger block of wood, in particular of posts (7), within a sufficiently short period prior to the technical drying or within a sufficiently short period subsequent to the logging of the corresponding wood.

10. Method according to one of claims 1 to 9, **characterized by** ensuring the minimum wood mois-ture content by increasing the wood moisture of the wood slats (12) prior to the technical dry-ing of the wood slats (12) by wetting the wood slats (12) by means of an atomized spray or a gentle rainfall of water.

11. Method according to one of claims 1 to 10, **characterized by** applying, in particular troweling, the initially viscous filling material (24) onto the visible surface of the wood slats (12) and thus, associated therewith, an impressing of the filling material (24) into the fissures (23).

12. Method according to claim 11, **characterized by** grinding filling material (24) spread and dis-tributed on the visible surface of the wood slats (12) after the filling material (24) has hardened and cured.

13. Method according to claim 11 and 12, **characterized by** repeating the procedural steps filling the fissures (23) with filling material (24) and grinding the visible surface of the wood slats (12) until initially exiting fissures (23) having a width of more than 2 mm are filled with filling material (24) as completely and entirely as possible.

14. Method according to one of claims 11 to 13, **characterized by** grinding the visible surface of the wood slats (12) until the hardened and cured filling material (24) is limited by the contours of the fissures (23) ) in a sharp-edged way.

15. Method according to one or more of the preceding claims, **characterized in that** the wood slats (12) or the wood elements (1) are used for creating an overlay or decorative layer (32) of wood for timber flooring or furniture boards, which overlay or decorative layer (32) is glued to at least one carrier layer (28).

## Revendications

1. Procédé d'influencement de la présentation optique d'un élément de bois (1) en forme de plaque en une ou plusieurs couches, **caractérisé par**
- la mise à disposition de lamelles de bois (12) d'une longueur (14) d'au moins 200 cm, d'une largeur (15) d'au moins 10 cm et d'une épaisseur (13) comprise entre 4 mm et 10 mm, de préférence de 7 mm environ,
- l'ajustement fiable d'une humidité du bois de ces lamelles de bois (12) de plus de 20 %, en particulier de plus de 40 %, de préférence entre 30 % et 70 %,
- le séchage technique pour un retrait rapide et intensif de l'humidité du bois de ces lamelles de bois (12), de telle sorte qu'une multitude de fissures (23) soient produites, réparties sporadiquement sur la longueur (14) et la largeur (15) des lamelles de bois (12) et s'étendant en partie sur toute l'épaisseur (13) des lamelles de bois (12),
- choix d'une matière de remplissage (24) visqueuse dans l'état de mise en oeuvre ou dans l'état initial, durcissant pendant une phase de prise, d'une couleur contrastant avec la couleur du bois ou la teinte du bois des lamelles de bois (12),
- remplissage d'au moins une partie des fissures (23), provoquées dans les lamelles de bois (12) par le séchage technique, avec la matière de remplissage (24), laquelle présent une couleur contrastant avec la couleur du bois, de telle sorte que les contours et les tracés des fissures (23) comblées avec elle soient optiquement soulignés.

2. Procédé selon la revendication 1, **caractérisé par** le choix d'une matière de remplissage (24) à base de polyuréthane avec un pouvoir de remplissage pour des fissures (23) d'une largeur moyenne de plus de 2 mm, de préférence de jusqu'à 20 mm.

3. Procédé selon la revendication 1 ou 2, **caractérisé par** en ce qu'avant le comblement des fissures (23) par la matière de remplissage (24) visqueuse à l'origine, les lamelles de bois (12) sont attachées à leur face inférieure (27), en particulier collées en pleine surface, à au moins une couche support (28) en bois.

4. Procédé selon la revendication 3, **caractérisé en ce que**, comme bois pour la couche support (28), on choisit une espèce de bois du groupe des bois tendres, en particulier de l'épicéa ou du sapin.

5. Procédé selon l'une quelconque des revendications 1 à 4, **caractérisé en ce que**, comme bois pour les lamelles de bois (12), on choisit une espèce de bois de la famille botanique des fagacées, en particulier du genre des chênes, de préférence de l'espèce chêne chevelu.

6. Procédé selon l'une quelconque des revendications 1 à 5, **caractérisé par** un retrait rapide et intensif de l'humidité des lamelles du bois (12) au moyen d'une chambre de séchage à haute température (20).

7. Procédé selon l'une quelconque des revendications 1 à 6, **caractérisé par** un retrait rapide et intensif de l'humidité des lamelle du bois (12) comportant une phase de séchage à haute température avec une température de plus de 80 °C, en particulier entre 100 °C et 200 °C.

8. Procédé selon l'une quelconque des revendications 1 à 7, **caractérisé par** un retrait rapide et intensif de l'humidité des lamelle du bois (12) comportant une phase de séchage à haute température avec une température comprise entre 150 °C et 200 °C pendant une période de 4 à 8 heures.

9. Procédé selon l'une quelconque des revendications 1 à 8, **caractérisé par** des mesures de garantie de l'humidité minimale du bois des lamelles de bois (12) avant le séchage technique des lamelles de bois (12) par une climatisation appropriée, en particulier par ombrage des lamelles de bois (12) et/ou par débitage des lamelles de bois (12) à partir d'un bloc de bois relativement grand, en particulier à partir de poteaux (7), dans un laps de temps suffisamment court avant le séchage technique ou dans un laps de temps suffisamment court après l'abattage du bois correspondant.

10. Procédé selon l'une quelconque des revendications 1 à 9, **caractérisé par** des mesures de garantie de l'humidité minimale du bois ou par l'accroissement de l'humidité du bois des lamelles de bois (12) avant le séchage technique des lamelles de bois (12) par mouillage des lamelles de bois (12) avec un brouillard pulvérisé ou une bruine d'eau.

11. Procédé selon l'une quelconque des revendications 1 à 10, **caractérisé par** l'application, en particulier par spatulage, de la matière de remplissage (24) originairement visqueuse sur la surface visible des lamelles de bois (12), et pas suite par le pressage de la matière de remplissage (24) dans les fissures (23).

12. Procédé selon la revendication 11, **caractérisé par** un ponçage de la matière de remplissage (24) étalée et distribuée à la surface visible des lamelles de bois (12) après le durcissement ou la prise de la matière de remplissage (24).

13. Procédé selon les revendications 11 et 12, **caractérisé par** la répétition des étapes de procédé remplissage des fissures (23) avec la matière de remplissage (23) et ponçage de la surface visible des lamelles de bois (12), jusqu'à ce que les fissures (23) d'une largeur de plus de 2 mm présentes à l'origine soient autant que possible toutes et complètement remplies de matière de remplissage (24).

14. Procédé selon l'une quelconque des revendications 11 à 13, **caractérisé par** un ponçage de la surface visible des lamelles de bois (12) jusqu'à ce que la matière de remplissage (24) durcie ou prise soit nettement délimitée par les contours des fissures (23).

15. Procédé selon l'une ou plusieurs des revendications précédentes, **caractérisé en ce que** les lamelles de bois (12) ou les éléments de bois (1) sont utilisés pour la formation d'une couche utile ou d'une couche décorative (32) en bois pour des parquets ou des panneaux de meuble, la couche utile ou la couche décorative (32) susdites étant collées sur au moins une couche support (28).
